# EUROPEAN PATENT APPLICATION

(11) **EP 3 940 928 A1**
(43) Date of publication of application: **19.01.2022**
(21) Application number: 19919048.9
(22) Date of filing: 11.03.2019
(51) Int. Cl.: H02K 5/16

(54) **MOTOR, ELECTRIC BLOWER, VACUUM CLEANER, AND HAND DRYER**

(71) Applicant: MITSUBISHI ELECTRIC CORPORATION, Chiyoda-ku Tokyo 100-8310 (JP)
(72) Inventor: ASO, Hiroki, Tokyo 100-8310 (JP); TSUCHIDA, Kazuchika, Tokyo 100-8310 (JP); TAKAYAMA, Yuji, Tokyo 100-8310 (JP); MATSUO, Haruka, Tokyo 100-8310 (JP); HAMAZAKI, Mitsumasa, Fukaya-shi, Saitama 369-1295 (JP); TERAMOTO, Masaya, Fukaya-shi, Saitama 369-1295 (JP)
(74) Representative: Mewburn Ellis LLP
(86) International application number: PCT/JP2019/009718
(87) International publication number: WO 2020/183574

(57) **Abstract**

A motor includes a shaft, a rotor attached to the shaft, a stator surrounding the rotor, a frame housing the stator, a first bearing and a second bearing attached to the frame via an insulating portion and located on one side of the rotor in an axial direction of the shaft, the first bearing and the second bearing rotatably supporting the shaft, a spacer attached to the frame and located between the first bearing and the second bearing in the axial direction, a washer disposed between the first bearing and the spacer in the axial direction and having insulating property, a preload member disposed between the spacer and the second bearing in the axial direction, and an insulating member disposed between the preload member and the second bearing in the axial direction or between the preload member and the spacer in the axial direction.

## Description

### TECHNICAL FIELD

The present invention relates to a motor, an electric blower, a vacuum cleaner, and a hand dryer.

### BACKGROUND ART

A motor used in an electric blower or the like includes a rotor attached to a shaft, and a bearing rotatably holding the rotor (see, for example, Patent Reference 1).

### PRIOR ART REFERENCE

### PATENT REFERENCE

[PATENT REFERENCE 1] Japanese Patent Application Publication No. H5-284709 (see FIG. 1)

### SUMMAY OF THE INVENTION

### PROBLEM TO BE SOLVED BY THE INVENTION

When a motor is driven by an inverter, a voltage called shaft voltage is generated on a shaft by high-frequency induction. When the shaft voltage increases, current flows through the bearing. This may cause damage, called electric corrosion, to raceways of inner and outer rings of the bearing and rolling surfaces of rolling elements of the bearing.

The present invention is intended to solve the above-described problem, and an object of the present invention is to suppress occurrence of electric corrosion of a bearing.

### MEANS OF SOLVING THE PROBLEM

A motor according to a first aspect of the present invention includes a shaft, a rotor attached to the shaft, a stator surrounding the rotor, a frame housing the stator, a first bearing and a second bearing attached to the frame and located on one side of the rotor in an axial direction of the shaft, the first bearing and the second bearing rotatably supporting the shaft, a spacer attached to the frame and located between the first bearing and the second bearing in the axial direction, a washer disposed between the first bearing and the spacer in the axial direction and having insulating property, a preload member disposed between the spacer and the second bearing in the axial direction, and an insulating member disposed between the preload member and the second bearing in the axial direction or between the preload member and the spacer in the axial direction.

A motor according to a second aspect of the present invention includes a shaft, a rotor attached to the shaft, a stator surrounding the rotor, a frame housing the stator, a first bearing and a second bearing attached to the frame and located on one side of the rotor in an axial direction of the shaft, the first bearing and the second bearing rotatably supporting the shaft, a spacer attached to the frame and located between the first bearing and the second bearing in the axial direction, a washer disposed between the first bearing and the spacer in the axial direction and having insulating property, and a preload member disposed between the spacer and the second bearing in the axial direction and having insulating property.

A motor according to a third aspect of the present invention includes a shaft, a rotor attached to the shaft, a stator surrounding the rotor, a frame housing the stator, a first bearing and a second bearing attached to the frame and located on one side of the rotor in an axial direction of the shaft, the first bearing and the second bearing rotatably supporting the shaft, a spacer attached to the frame and disposed between the first bearing and the second bearing in the axial direction, the spacer having insulating property, a washer disposed between the first bearing and the spacer in the axial direction, and a preload member disposed between the spacer and the second bearing in the axial direction.

A motor according to a fourth aspect of the present invention includes a shaft, a rotor attached to the shaft, a stator surrounding the rotor, a frame housing the stator, a first bearing and a second bearing attached to the frame and located on one side of the rotor in an axial direction of the shaft, the first bearing and the second bearing rotatably supporting the shaft, a spacer attached to the frame and located between the first bearing and the second bearing in the axial direction, an insulating member provided between the spacer and the frame in a radial direction about the shaft, a washer disposed between the first bearing and the spacer in the axial direction, and a preload member disposed between the spacer and the second bearing in the axial direction.

A motor according to a fifth aspect of the present invention includes a shaft, a rotor attached to the shaft, a stator surrounding the rotor, a frame housing the stator, a first bearing and a second bearing attached to the frame and located on one side of the rotor in an axial direction of the shaft, the first bearing and the second bearing rotatably supporting the shaft, a spacer attached to the frame and disposed between the first bearing and the second bearing in the axial direction, the spacer having conductivity, a contact member attached to the spacer so as to be in contact with the shaft and having conductivity, a washer disposed between the first bearing and the spacer in the axial direction and having insulating property, and a preload member disposed between the spacer and the second bearing in the axial direction.

A motor according to a sixth aspect of the present invention includes a shaft, a rotor attached to the shaft, a stator surrounding the rotor, a frame housing the stator, a first bearing and a second bearing attached to the frame and located on one side of the rotor in an axial direction of the shaft, the first bearing and the second bearing rotatably supporting the shaft, a spacer attached to the frame and located between the first bearing and the second bearing in the axial direction, a washer disposed between the first bearing and the spacer in the axial direction and having insulating property, a preload member disposed between the spacer and the second bearing in the axial direction and having insulating property, and a contact member attached to the frame so as to be in contact with the shaft.

### EFFECTS OF THE INVENTION

According to the present invention, the current flowing through the first bearing and the second bearing can be reduced, thereby suppressing occurrence of electric corrosion.

### BRIEF DESCRIPTION OF THE DRAWINGS

FIG. 1 is a longitudinal-sectional view illustrating an electric blower having a motor of a first embodiment.
FIG. 2 is a longitudinal-sectional view illustrating the motor of the first embodiment.
FIG. 3 is a schematic diagram for explaining shaft current generated in the motor.
FIG. 4 is a longitudinal-sectional view illustrating another configuration example of the motor of the first embodiment.
FIG. 5 is a longitudinal-sectional view illustrating a motor of a second embodiment.
FIG. 6 is a longitudinal-sectional view illustrating a motor of a third embodiment.
FIG. 7 is a longitudinal-sectional view illustrating a motor of a fourth embodiment.
FIG. 8 is a perspective view illustrating a spacer and an insulating member of the fourth embodiment.
FIG. 9 is a longitudinal-sectional view illustrating a motor of a fifth embodiment.
FIG. 10 is a perspective view illustrating a spacer and a contact member of the fifth embodiment.
FIG. 11 is a longitudinal-sectional view illustrating a motor of a sixth embodiment.
FIG. 12 is an enlarged schematic diagram illustrating a portion including a bearing of a motor of a first modification.
FIG. 13 is an enlarged schematic diagram illustrating a portion including a bearing of a motor of a second modification.
FIG. 14 is a diagram illustrating a vacuum cleaner to which the motor of each embodiment or modification is applicable.
FIG. 15 is a diagram illustrating a hand dryer to which the motor of each embodiment or modification is applicable.

### MODE FOR CARRYING OUT THE INVENTION

Embodiments of the present invention will be described in detail below with reference to the figures. In this regard, the present invention is not limited to these embodiments.

### FIRST EMBODIMENT

### (Configuration of Electric blower 100)

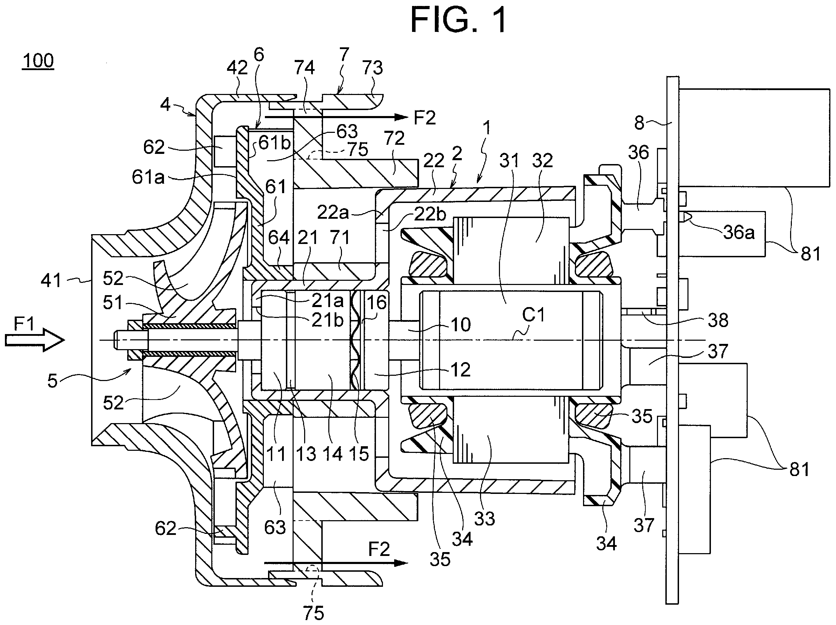

FIG. 1 is a longitudinal-sectional view illustrating an electric blower 100 of a first embodiment. The electric blower 100 includes a motor 1 having a shaft 10, a moving blade 5 as an impeller attached to an end of the shaft 10, a stationary blade 6 disposed adjacent to the moving blade 5, a fan cover 4 covering the moving blade 5, a housing 7 supporting these components, and a circuit board 8 for controlling the motor 1.

Hereinafter, a direction of an axis C1, which is a center axis of the shaft 10, is referred to as an "axial direction". A circumferential direction about the axis C1 is referred to as a "circumferential direction". A radial direction about the axis C1 is referred to as a "radial direction". A sectional view in a plane parallel to the axial direction is referred to as a "longitudinal-sectional view".

The motor 1 is a permanent-magnet synchronous motor and is driven by an inverter. The motor 1 includes the shaft 10, a rotor 31 attached to the shaft 10, a stator 32 provided so as to surround the rotor 31, a frame 2 housing the stator 32, and a first bearing 11 and a second bearing 12 rotatably supporting the shaft 10.

The rotor 31 has a cylindrical rotor core fixed to the shaft 10 and permanent magnets embedded in the rotor core. The rotor core is formed of a plurality of electromagnetic steel sheets which are stacked in the axial direction and integrated together by crimping, welding, bonding, or the like. The shaft 10 protrudes from the rotor 31 on one side (the left side in FIG. 1) in the axial direction.

The stator 32 is provided so as to surround the rotor 31 from an outer side in the radial direction. The stator 32 includes a stator core 33, an insulating portion 34 attached to the stator core 33, and a coil 35 wound on the stator core 33 via the insulating portion 34.

The stator core 33 is formed of a plurality of electromagnetic steel sheets which are stacked in the axial direction and integrated together by crimping, welding, bonding, or the like. The insulating portion 34 is formed by integrally molding a thermoplastic resin, such as polybutylene terephthalate (PBT), with the stator core 33, or by fixing a molded body of the thermoplastic resin to the stator core 33. The insulating portion 34 has a board fixing portion 36 to which the circuit board 8 is fixed, and a board contact portion 37 which is in contact with the circuit board 8. The coil 35 is formed of magnet wires wound on the stator core 33 via the insulating portion 34.

The frame 2 constitutes an outer shell of the motor 1, and is formed of a metal such as aluminum. The frame 2 has a bearing housing portion 21 that houses the bearings 11 and 12, and a stator housing portion 22 that houses the stator 32. Each of the bearing housing portion 21 and the stator housing portion 22 has a cylindrical shape about the axis C1.

The bearing housing portion 21 of the frame 2 has a wall 21a on the side facing the moving blade 5, and the wall 21a is perpendicular to the axial direction. A hole 21b is formed through the wall 21a, and the shaft 10 passes through the hole 21b. The first bearing 11 and the second bearing 12 that support the shaft 10 are fixed inside the bearing housing portion 21.

The first bearing 11 and the second bearing 12 are disposed on one side (the left side in FIG. 1) of the rotor 31 in the axial direction. In other words, the motor 1 has a cantilevered support structure in which the shaft 10 is supported at one side of the rotor 31 in the axial direction. The first bearing 11 is located on the moving blade 5 side, while the second bearing 12 is located on the rotor 31 side.

A washer 13, a spacer 14, a preload member 15, and an insulating member 16 are disposed between the first bearing 11 and the second bearing 12 in the axial direction. The washer 13, the spacer 14, the preload member 15, and the insulating member 16 are arranged in this order from the first bearing 11 side. These components will be described later.

The stator 32 is fixed inside the stator housing portion 22 of the frame 2 by fixing members. Although not illustrated in the figure, a plurality of fixing members are provided in the circumferential direction about the axis C1. Instead of providing the fixing member, an outer circumference of the stator 32 may be fitted to an inner circumference of the stator housing portion 22. The stator housing portion 22 has an outer diameter larger than that of the bearing housing portion 21, and has a wall 22a on the bearing housing portion 21 side. A hole 22b is formed through the wall 22a, and air passes through the hole 22b.

The moving blade 5 is a diagonal flow fan in this example. The moving blade 5 has a hub 51 fixed to the shaft 10 and a plurality of vanes 52 formed on an outer circumferential surface of the hub 51. The moving blade 5 generates an air flow that is inclined with respect to the axial direction and directed to the outer side in the radial direction. The moving blade 5 is not limited to the diagonal flow fan, but may be a turbofan, for example.

The stationary blade 6 includes a disk-shaped main plate 61, a plurality of vanes 62 formed on a surface 61a of the main plate 61 on the moving blade 5 side, and a plurality of air guide plates 63 formed on a surface 61b of the main plate 61 opposite to the vanes 62. The vanes 62 are arranged at equal intervals in the circumferential direction. Further, the air guide plates 63 are arranged at equal intervals in the circumferential direction. The vanes 62 have a function of rectifying the air flow directed to the outer side in the radial direction by the rotation of the moving blade 5. The air guide plates 63 have a function of guiding part of the air flow, which is rectified by the vanes 62, toward the inner side in the radial direction and leading the air flow to the inside of the motor 1.

The stationary blade 6 also has a cylindrical fixing portion 64 at a center of the main plate 61 in the radial direction. The tip of the bearing housing portion 21 of the frame 2 is fitted to an inner circumference of the fixing portion 64.

The fan cover 4 is provided to cover the moving blade 5. The fan cover 4 has an intake port 41 that faces the center of the moving blade 5 in the radial direction. An air path is formed between the fan cover 4 and the moving blade 5 to guide the air flowing in through the intake port 41 to the outer side in the radial direction. The fan cover 4 also has an outer peripheral wall 42 on its outer side in the radial direction, and the outer peripheral wall 42 is fixed to the housing 7.

The housing 7 has a first frame support portion 71, a second frame support portion 72, and a cover support portion 73 in this order from the inner side in the radial direction. Each of the first frame support portion 71, the second frame support portion 72, and the cover support portion 73 is formed to have a cylindrical shape about the axis C1.

The bearing housing portion 21 of the frame 2 is fitted to an inner circumference of the first frame support portion 71. The stator housing portion 22 of the frame 2 is fitted to an inner circumference of the second frame support portion 72. The cover support portion 73 is fitted to an inner circumference of the outer peripheral wall 42 of the fan cover 4.

The housing 7 has a wall 74 perpendicular to the axis C1, between the second frame support portion 72 and the cover support portion 73. The wall 74 has a plurality of openings 75 through which air flowing along the outer peripheral wall 42 of the fan cover 4 passes in the axial direction. The openings 75 are arranged at equal intervals in the circumferential direction.

The air flowing in through the intake port 41 by the rotation of the moving blade 5 as illustrated by an arrow F1 flows to the outer side in the radial direction by the vanes 52 of the moving blade 5 and is rectified by the vanes 62 of the stationary blade 6. The air reaching an outer peripheral portion of the fan cover 4 changes its direction to the axial direction as illustrated by an arrow F2, and is discharged to the outside through the openings 75 of the housing 7. Part of the air reaching the outer peripheral portion of the fan cover 4 is guided to the inner side in the radial direction by the air guide plates 63 of the stationary blade 6 and flows into the inside of the stator housing portion 22 through the holes 22b of the frame 2.

The circuit board 8 that controls the driving of the motor 1 is provided on a side of the motor 1 opposite to the moving blade 5. A plurality of electronic components 81, which are used to control the motor 1, are mounted on the circuit board 8. The electronic components 81 include, for example, switching elements of the inverter that drives the motor 1, a detection circuit that detects a rotational position of the rotor 31, an electrolytic capacitor, and the like.

The circuit board 8 is held in a state where the circuit board 8 is in contact with the board contact portion 37 provided on the insulating portion 34 of the motor 1. Protrusions 36a of the board fixing portion 36 provided on the insulating portion 34 protrude through mounting holes of the circuit board 8, and the protrusions 36a are welded thermally or ultrasonically to thereby fix the circuit board 8 to the insulating portion 34. In addition, connection terminals 38 for electric connection are provided between the motor 1 and the circuit board 8.

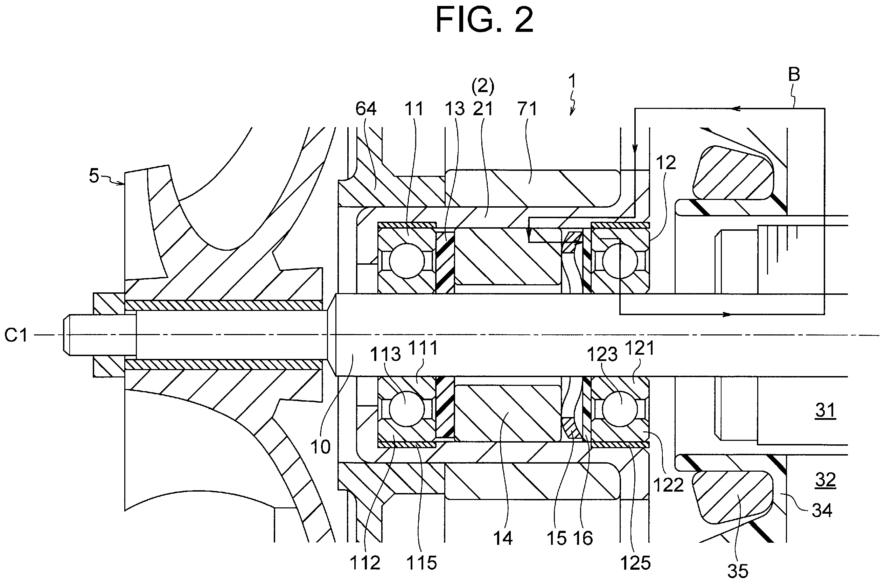

FIG. 2 is a longitudinal-sectional view illustrating the motor 1. As described above, the first bearing 11 and the second bearing 12 that support the shaft 10 are provided inside the bearing housing portion 21 of the frame 2.

The first bearing 11 has an inner ring 111 fitted to the outer circumference of the shaft 10, an outer ring 112 provided on the outer side of the inner ring 111 in the radial direction, and rolling elements 113 provided between the inner ring 111 and the outer ring 112. The rolling elements 113 are balls in this example. The inner ring 111 and the outer ring 112 both have raceways that are in contact with the rolling elements 113. An insulating adhesive agent 115 as an insulating portion is provided between the outer ring 112 and the bearing housing portion 21. The first bearing 11 is fixed to the bearing housing portion 21 by the adhesive agent 115.

The second bearing 12 has an inner ring 121 fitted to the outer circumference of the shaft 10, an outer ring 122 provided on the outer side of the inner ring 121 in the radial direction, and rolling elements 123 provided between the inner ring 121 and the outer ring 122. The rolling elements 123 are balls in this example. The inner ring 121 and the outer ring 122 both have raceways that are in contact with the rolling elements 123. An insulating adhesive agent 125 as an insulating portion is provided between the outer ring 122 and the bearing housing portion 21. The second bearing 12 is fixed to the bearing housing portion 21 by the adhesive agent 125.

The spacer 14 is provided between the first bearing 11 and the second bearing 12 in the axial direction. The spacer 14 is a cylindrical member formed of a metal such as aluminum and has a function of determining an interval between the first bearing 11 and the second bearing 12.

An outer circumference of the spacer 14 is fitted to an inner circumference of the bearing housing portion 21 of the frame 2 and is fixed to the bearing housing portion 21 by crimping. Specifically, a part of the bearing housing portion 21 is pressed from the outer circumferential side to protrude inward in the radial direction, and the protruding portion of the bearing housing portion 21 bites into the outer circumference of the spacer 14 so that the spacer 14 is fixed to the bearing housing portion 21. Crimping is desirably performed at a plurality of positions in the circumferential direction of the spacer 14. A gap is formed between an inner circumference of the spacer 14 and the outer circumference of the shaft 10.

The washer 13 is provided between the first bearing 11 and the spacer 14 in the axial direction. The washer 13 is a ring-shaped member formed of an insulating material such as a rubber. The washer 13 is sandwiched and held in the axial direction by the first bearing 11 and the spacer 14. An outer circumference of the washer 13 is not in contact with the bearing housing portion 21, and an inner circumference of the washer 13 is not in contact with the shaft 10.

The preload member 15 is provided between the spacer 14 and the second bearing 12 in the axial direction. The preload member 15 is formed of a metal such as stainless steel or spring steel. The preload member 15 is a wave washer in this example and generates a biasing force in the axial direction. For this reason, the preload member 15 is also referred to as a preload spring. The preload member 15 biases the spacer 14 toward the first bearing 11. An outer circumference of the preload member 15 is not in contact with the bearing housing portion 21, and an inner circumference of the preload member 15 is not in contact with the shaft 10.

The insulating member 16 is provided between the preload member 15 and the second bearing 12 in the axial direction. The insulating member 16 is formed of an insulating material. More specifically, the insulating member 16 is formed of a resin such as polycarbonate (PC), polyacetal (POM), polyetheretherketone (PEEK), or a rubber.

The insulating member 16 is an annular member and is held in a state where the insulating member 16 is sandwiched between the preload member 15 and the second bearing 12 in the axial direction. The insulating member 16 has a function of suppressing a current, which flows from the frame 2 to the spacer 14, from flowing into the second bearing 12 through the preload member 15, as described below.

### (Function)

Next, a function of the electric blower 100 will be described. The motor 1 is driven under pulse width modulation (PWM) control by the inverter. The current flowing through the coil 35 of the stator 32 generates a rotating magnetic field, thereby causing the rotor 31 to rotate. The rotation of the rotor 31 rotates the shaft 10, causing the moving blade 5 to rotate. When the moving blade 5 rotates, air flows in through the intake port 41 of the fan cover 4.

The air flowing in through the intake port 41 flows through the air path between the moving blade 5 and the fan cover 4 toward the outer side in the radial direction and is rectified by the vanes 62 of the stationary blade 6. Most of the air passing through the stationary blade 6 flows in the axial direction as illustrated by the arrow F2 in FIG. 1, and is discharged to the outside through the openings 75 of the housing 7. Part of the air passing through the stationary blade 6 flows to the inner side in the radial direction by the air guide plates 63 and then flows into the inside of the frame 2 to thereby cool the motor 1.

In general, when a motor is driven by an inverter, a carrier frequency is set higher than the audible frequency in order to reduce noise generated by switching. However, as the carrier frequency increases, a voltage called shaft voltage is generated in the shaft due to high-frequency induction. When the shaft voltage increases, a potential difference between the inner and outer rings of the bearing supporting the shaft increases, and thus the current is likely to flow to the shaft through the bearings. This current is called shaft current. When the shaft current is generated, a damage called electric corrosion occurs on raceways of the inner and outer rings of the bearings and on the rolling surfaces of the rolling elements of the bearings.

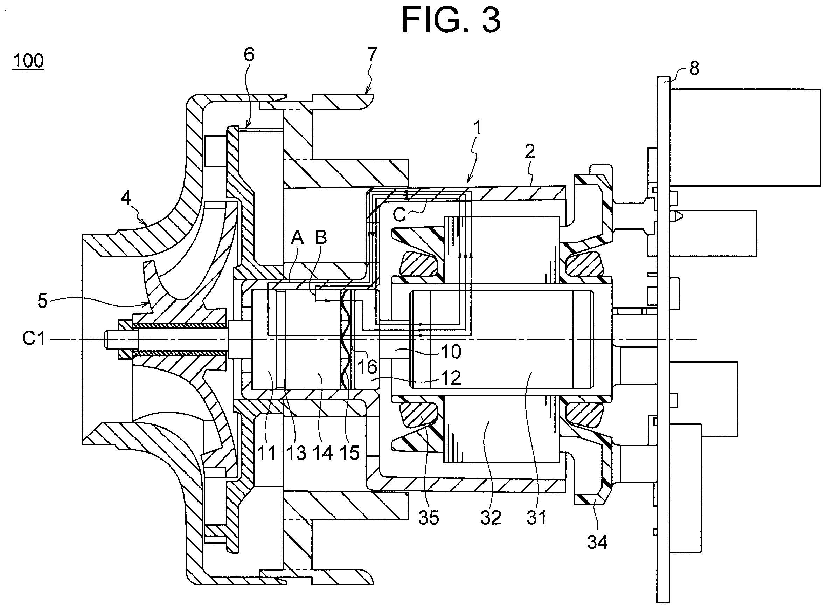

FIG. 3 is a schematic diagram for explaining the shaft current in the motor 1. As illustrated by arrows A, B, and C in FIG. 3, there are three paths of the shaft current.

The path A is a path through which the current flowing from the stator 32 to the metal frame 2 further flows from the frame 2 to the first bearing 11 and then flows from the first bearing 11 to the shaft 10. The current passing through the path A can be suppressed by providing the insulating adhesive agent 115 (FIG. 2) between the first bearing 11 and the frame 2. A member to be provided between the first bearing 11 and the frame 2 is not limited to the insulating adhesive agent 115, but may be any other insulating member.

The path C is a path through which the current flowing from the stator 32 to the frame 2 further flows from the frame 2 to the second bearing 12 and then flows from the second bearing 12 to the shaft 10. The current passing through the path C can be suppressed by providing the insulating adhesive agent 125 (FIG. 2) between the second bearing 12 and the frame 2. A member to be provided between the second bearing 12 and the frame 2 is not limited to the insulating adhesive agent 125, but may be any other insulating member.

Meanwhile, the current flowing from the stator 32 to the frame 2 flows to the metal spacer 14 which is in contact with the frame 2. The washer 13 between the spacer 14 and the first bearing 11 is formed of the rubber, but the preload member 15 between the spacer 14 and the second bearing 12 is formed of the metal. Thus, the current may flow from the spacer 14 to the second bearing 12 through the preload member 15 and may further flow to the shaft 10. This current path is referred to as the path B.

In the first embodiment, as illustrated in FIG. 2, the insulating member 16 is disposed between the preload member 15 and the second bearing 12. Thus, the current flowing from the frame 2 to the second bearing 12 via the spacer 14 and the preload member 15, i.e., the current passing through the path B, can be suppressed by the insulating member 16.

Thus, the current passing through the above-described paths A, B, and C can be suppressed, thereby suppressing the current flowing through the first bearing 11 and the second bearing 12. As a result, the occurrence of electric corrosion of the first bearing 11 and the second bearing 12 can be suppressed.

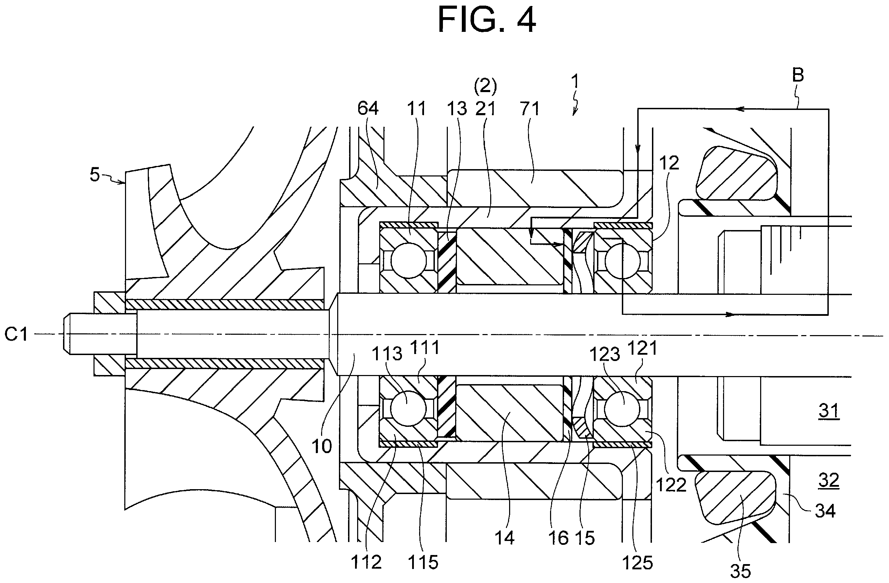

FIG. 4 is a diagram illustrating another configuration example of the motor 1 of the first embodiment. As illustrated in FIG. 4, the insulating member 16 may be disposed between the preload member 15 and the spacer 14 in the axial direction. In this case, the current flowing from the frame 2 to the preload member 15 via the spacer 14 can be suppressed by the insulating member 16. Therefore, as in the configuration illustrated in FIG. 2, the current flowing to the first bearing 11 and the second bearing 12 can be suppressed, thereby suppressing occurrence of electric corrosion.

### (Effects of Embodiment)

As described above, the motor 1 of the first embodiment includes the bearings 11 and 12 attached to the frame 2 and rotatably supporting the shaft 10, the spacer 14 attached to the frame 2 and located between the bearings 11 and 12 in the axial direction, the insulating washer 13 disposed between the first bearing 11 and the spacer 14 in the axial direction, the preload member 15 disposed between the spacer 14 and the second bearing 12 in the axial direction, and the insulating member 16 disposed between the preload member 15 and the second bearing 12 in the axial direction or between the preload member 15 and the spacer 14 in the axial direction.

Therefore, even when the carrier frequency of the inverter is high and the shaft voltage is high, the current flowing from the frame 2 to the first bearing 11 and the second bearing 12 can be suppressed by the washer 13 and the insulating member 16. Thus, the occurrence of electric corrosion of the first bearing 11 and the second bearing 12 can be suppressed, and the reliability of the motor 1 and the electric blower 100 can be improved.

The above-described effects can be obtained by disposing the insulating washer 13 between the first bearing 11 and the spacer 14, and disposing the insulating member 16 between the preload member 15 and the second bearing 12 or between the preload member 15 and the spacer 14. Thus, the motor 1 has a simple configuration, and assembling thereof is easy.

### Second Embodiment

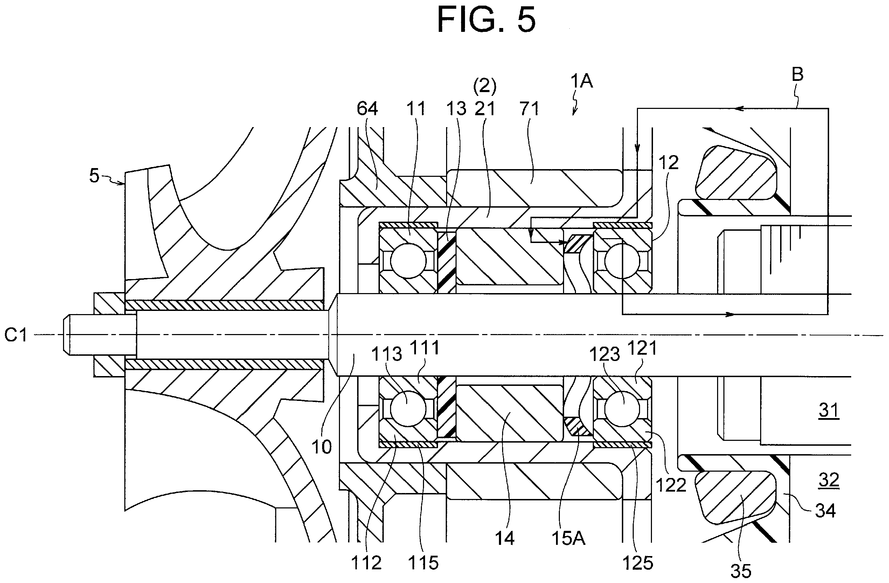

Next, a second embodiment will be described. FIG. 5 is a longitudinal-sectional view illustrating a motor 1A of the second embodiment. In the motor 1A of the second embodiment, a preload member 15A is formed of an insulating material. More specifically, the preload member 15A is formed of a resin such as PC, POM or PEEK.

The preload member 15A has a function of biasing the spacer 14 toward the first bearing 11 side with respect to the second bearing 12, as is the case with the preload member 15 of the first embodiment. In addition, the preload member 15A of the second embodiment has a function of suppressing the current flowing from the spacer 14 to the second bearing 12.

In the second embodiment, the current flowing from the frame 2 to the second bearing 12 via the spacer 14 can be suppressed by the preload member 15A having insulating property. Thus, there is no need to provide the insulating member 16 (FIG. 2) described in the first embodiment.

Other components of the motor 1A of the second embodiment are configured in the same manner as those of the motor 1 of the first embodiment.

As described above, the motor 1A of the second embodiment includes the bearings 11 and 12 attached to the frame 2 and rotatably supporting the shaft 10, the spacer 14 attached to the frame 2 and located between the bearings 11 and 12 in the axial direction, the insulating washer 13 disposed between the first bearing 11 and the spacer 14 in the axial direction, and the insulating preload member 15A disposed between the spacer 14 and the second bearing 12 in the axial direction.

Therefore, even when the carrier frequency of the inverter is high and the shaft voltage is high, the current flowing from the frame 2 to the first bearing 11 and the second bearing 12 can be suppressed by the washer 13 and the preload member 15A. Thus, the occurrence of electric corrosion of the first bearing 11 and the second bearing 12 can be suppressed, and the reliability of the motor 1 and the electric blower 100 can be improved.

The above-described effects can be obtained by forming the preload member 15A of the insulating material. Thus, the motor 1 has a simple configuration, and assembling thereof is easy. Further, as compared to the motor 1 of the first embodiment, the number of parts of the motor 1A can be decreased by one.

The insulating member 16 described in the first embodiment may be added between the preload member 15A and the second bearing 12, or between the preload member 15A and the spacer 14.

### Third Embodiment

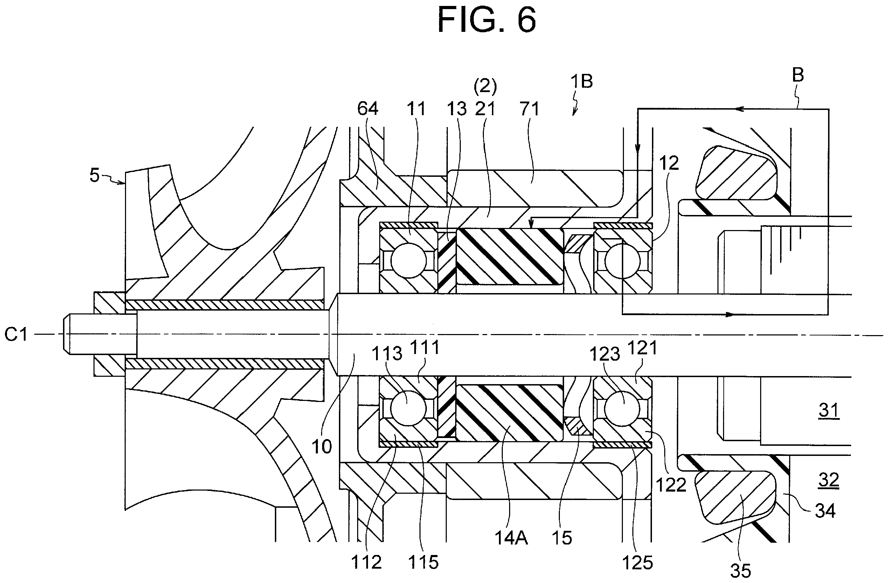

Next, a third embodiment will be described. FIG. 6 is a longitudinal-sectional view illustrating a motor 1B of the third embodiment. In the motor 1B of the third embodiment, a spacer 14A is formed of an insulating material. More specifically, the spacer 14A is formed of a resin such as PC, POM or PEEK.

The spacer 14A has a function of determining the interval between the first bearing 11 and the second bearing 12, as is the case with the spacer 14 of the first embodiment. In addition, the spacer 14A of the third embodiment has a function of suppressing the current flowing from the frame 2 to the second bearing 12.

In the third embodiment, since the spacer 14A has insulating property, the current flowing from the frame 2 to the spacer 14A can be suppressed, thereby suppressing the current flowing to the second bearing 12. Thus, there is no need to provide the insulating member 16 (FIG. 2) described in the first embodiment. Further, the preload member 15 can be formed of a metal, as in the first embodiment.

Since the spacer 14A has insulating property, the washer 13 disposed between the spacer 14A and the first bearing 11 can be formed of a conductive member formed of a metal or the like.

Other components of the motor 1B of the third embodiment are configured in the same manner as those of the motor 1 of the first embodiment.

As described above, the motor 1B of the third embodiment includes the bearings 11 and 12 attached to the frame 2 and rotatably supporting the shaft 10, the insulating spacer 14A attached to the frame 2 and located between the bearings 11 and 12 in the axial direction, the washer 13 disposed between the first bearing 11 and the spacer 14A in the axial direction, and the preload member 15 disposed between the spacer 14A and the second bearing 12 in the axial direction.

Therefore, even when the carrier frequency of the inverter is high and the shaft voltage is high, the current flowing from the frame 2 to the first bearing 11 and the second bearing 12 can be suppressed by the spacer 14A. Thus, the occurrence of electric corrosion of the first bearing 11 and the second bearing 12 can be suppressed, and the reliability of the motor 1 and the electric blower 100 can be improved.

The above-described effects can be obtained by forming the spacer 14A of the insulating material. Thus, the motor 1 has a simple configuration, and assembling thereof is easy. As compared to the motor 1 of the first embodiment, the number of parts of the motor 1B can be decreased by one.

The insulating member 16 described in the first embodiment may be provided between the preload member 15 and the second bearing 12, or between the preload member 15 and the spacer 14A. Further, the insulating preload member 15A described in the second embodiment may be used in place of the preload member 15.

### Fourth Embodiment

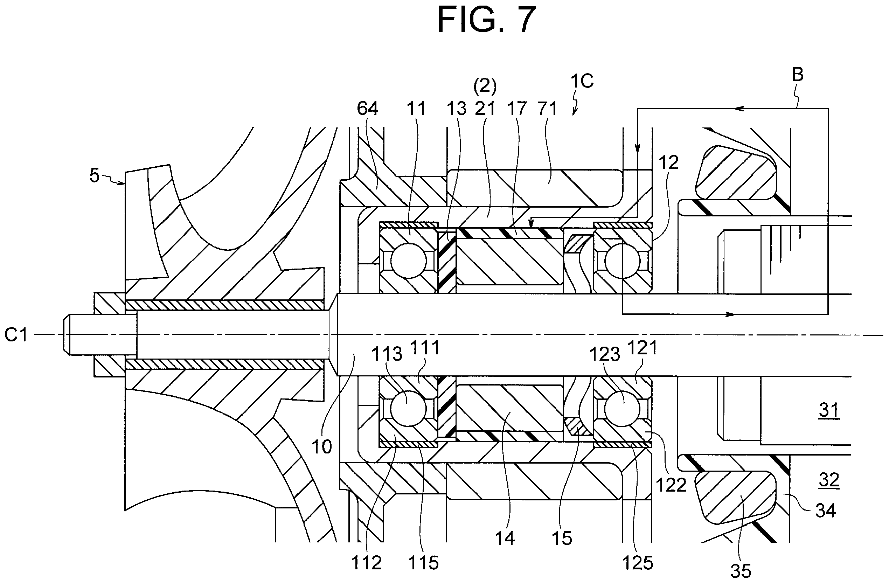

Next, a fourth embodiment will be described. FIG. 7 is a longitudinal-sectional view illustrating a motor 1C of the fourth embodiment. In the motor 1C of the fourth embodiment, an insulating member 17 is provided between the spacer 14 and the frame 2 in the radial direction. The insulating member 17 is formed of a resin such as PC, POM or PEEK.

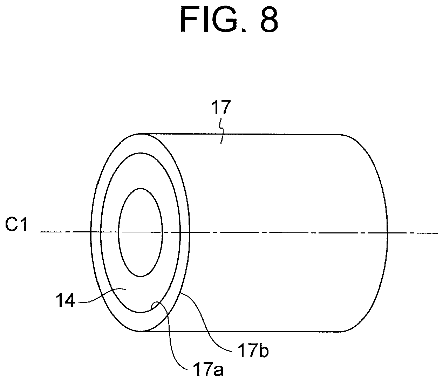

FIG. 8 is a perspective view illustrating the spacer 14 and the insulating member 17. The spacer 14 is formed of a metal such as aluminum, as in the first embodiment. The insulating member 17 is a cylindrical member. An inner circumference 17a of the insulating member 17 is fitted to the outer circumference of the spacer 14. An outer circumference 17b of the insulating member 17 is fixed to the inner circumference of the bearing housing portion 21 of the frame 2 by, for example, an adhesive agent.

The insulating member 17 has a function of suppressing the current flowing from the frame 2 to the spacer 14. The insulating member 17 may be integrally formed with the spacer 14.

In the fourth embodiment, the current flowing from the frame 2 to the spacer 14 can be suppressed by the insulating member 17 interposed between the frame 2 and the spacer 14. Thus, there is no need to provide the insulating member 16 (FIG. 2) described in the first embodiment. Further, the preload member 15 can be formed of a metal, as in the first embodiment.

Since the insulating member 17 suppresses the flow of current to the spacer 14, the washer 13 disposed between the spacer 14 and the first bearing 11 can be formed of a metal.

Other components of the motor 1C of the fourth embodiment are configured in the same manner as those of the motor 1 of the first embodiment.

As described above, the motor 1C of the fourth embodiment includes the bearings 11 and 12 attached to the frame 2 and rotatably supporting the shaft 10, the spacer 14 attached to the frame 2 and located between the bearings 11 and 12 in the axial direction, the insulating member 17 provided between the spacer 14 and the frame 2 in the radial direction, the washer 13 disposed between the first bearing 11 and the spacer 14 in the axial direction, and the preload member 15 disposed between the spacer 14 and the second bearing 12 in the axial direction.

Therefore, even when the carrier frequency of the inverter is high and the shaft voltage is high, the current flowing from the frame 2 to the spacer 14 can be suppressed by the insulating member 17. Thus, the occurrence of electric corrosion of the first bearing 11 and the second bearing 12 can be suppressed, and the reliability of the motor 1 and the electric blower 100 can be improved.

The above-described effects can be obtained by providing the insulating member 17 between the spacer 14 and the frame 2. Thus, the motor 1 has a simple configuration, and assembling thereof is easy. As compared to the motor 1 of the first embodiment, the number of parts of the motor 1C of this embodiment can be decreased by one.

The insulating member 16 described in the first embodiment may be added between the preload member 15 and the second bearing 12, or between the preload member 15 and the spacer 14. Further, the insulating preload member 15A described in the second embodiment may be used in place of the preload member 15. The insulating spacer 14A described in the third embodiment may be used in place of the metal spacer 14.

### Fifth Embodiment

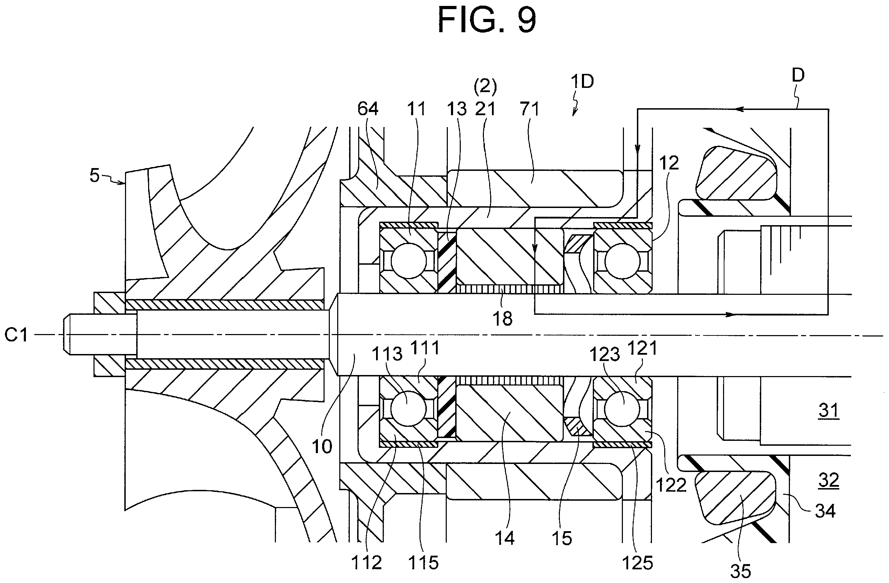

Next, a fifth embodiment will be described. FIG. 9 is a longitudinal-sectional view illustrating a motor 1D of the fifth embodiment. In the motor 1D of the fifth embodiment, a contact member 18 having conductivity is provided between the spacer 14 and the shaft 10. The contact member 18 is, for example, a brush formed of carbon.

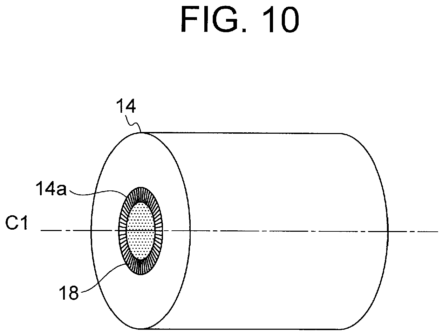

FIG. 10 is a perspective view illustrating the spacer 14 and the contact member 18. The spacer 14 is formed of a metal such as aluminum. The contact member 18 is attached to an inner circumference 14a of the spacer 14 by, for example, a conductive adhesive agent. The contact member 18 is in contact with the outer circumference of the shaft 10. The contact member 18 has a function of making the frame 2 and the shaft 10 electrically connected to each other.

In the fifth embodiment, the frame 2 and the shaft 10 are electrically connected to each other by the contact member 18. Thus, the current flowing from the frame 2 to the spacer 14 flows to the shaft 10 through the contact member 18 without passing through the first bearing 11 and the second bearing 12, as illustrated by the arrow D in FIG. 9. Thus, the current flowing through the first bearing 11 and the second bearing 12 can be suppressed.

Since the current flowing to the bearings 11 and 12 can be suppressed by making the frame 2 and the shaft 10 electrically connected to each other, there is no need to provide the insulating member 16 (FIG. 2) described in the first embodiment. Further, the preload member 15 can be formed of a metal.

Other components of the motor 1D of the fifth embodiment are configured in the same manner as those of the motor 1 of the first embodiment.

As described above, the motor 1D of the fifth embodiment includes the bearings 11 and 12 attached to the frame 2 and rotatably supporting the shaft 10, the spacer 14 attached to the frame 2 and located between the bearings 11 and 12 in the axial direction, the conductive contact member 18 attached to the spacer 14 so as to be in contact with the shaft 10, the insulating washer 13 disposed between the first bearing 11 and the spacer 14 in the axial direction, and the preload member 15 disposed between the spacer 14 and the second bearing 12 in the axial direction.

Therefore, even when the carrier frequency of the inverter is high and the shaft voltage is high, the current flowing from the frame 2 to the spacer 14 can be made to flow to the shaft 10 via the contact member 18 without passing through the bearings 11 and 12. Thus, the occurrence of electric corrosion of the first bearing 11 and the second bearing 12 can be suppressed, and the reliability of the motor 1 and the electric blower 100 can be improved.

The above-described effects can be obtained by fixing the contact member 18, which is in contact with the shaft 10, to the spacer 14. Thus, the motor 1 has a simple configuration, and assembling thereof is easy.

The insulating member 16 described in the first embodiment may be further provided between the preload member 15 and the second bearing 12, or between the preload member 15 and the spacer 14. Further, the insulating preload member 15A described in the second embodiment may be used in place of the preload member 15.

### Sixth Embodiment

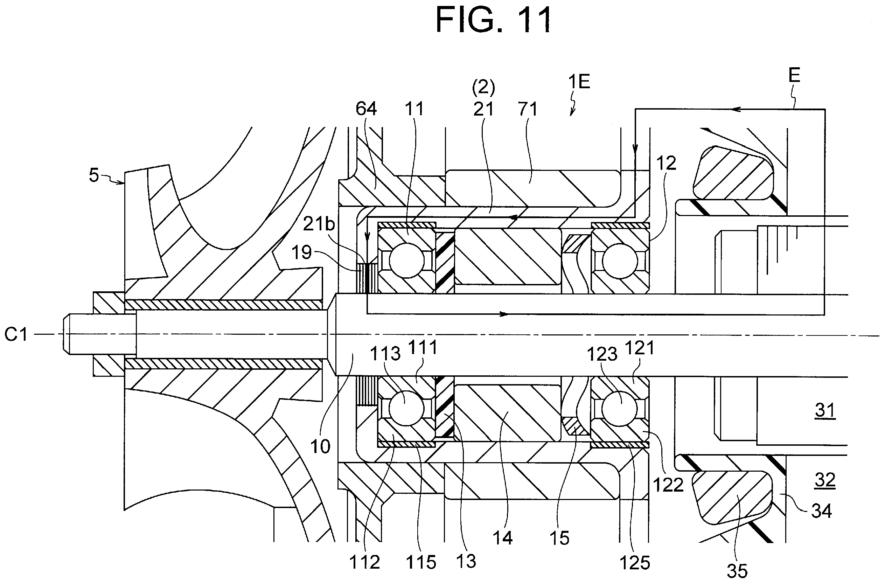

Next, a sixth embodiment will be described. FIG. 11 is a longitudinal-sectional view illustrating a motor 1E of the sixth embodiment. In the motor 1E of the sixth embodiment, a contact member 19 having conductivity is provided between the frame 2 and the shaft 10. The contact member 19 is, for example, a brush formed of carbon.

As described above, the hole 21b is formed on the wall 21a of the bearing housing portion 21 of the frame 2, and the shaft 10 is inserted through the hole 21b. The contact member 19 is attached to the hole 21b by, for example, a conductive adhesive agent. The contact member 19 is in contact with the outer circumference of the shaft 10. The contact member 19 has a function of making the frame 2 and the shaft 10 electrically connected to each other.

In this sixth embodiment, the frame 2 and the shaft 10 are electrically connected to each other by the contact member 19. Thus, the current flowing through the frame 2 flows to the shaft 10 through the contact member 19 without passing through the first bearing 11 and the second bearing 12, as illustrated by the arrow E in FIG. 11. Thus, the current flowing to the first bearing 11 and the second bearing 12 can be suppressed.

Since the current flowing to the bearings 11 and 12 can be suppressed by making the frame 2 and the shaft 10 electrically connected to each other, there is no need to provide the insulating member 16 (FIG. 2) described in the first embodiment. Further, each of the preload member 15 and the spacer 14 can be formed of a metal.

Other components of the motor 1E of the sixth embodiment are configured in the same manner as those of the motor 1 of the first embodiment.

As described above, the motor 1E of the sixth embodiment includes the bearings 11 and 12 attached to the frame 2 and rotatably supporting the shaft 10, the spacer 14 attached to the frame 2 and located between the bearings 11 and 12 in the axial direction, the insulating washer 13 disposed between the first bearing 11 and the spacer 14 in the axial direction, the preload member 15 disposed between the spacer 14 and the second bearing 12 in the axial direction, and the conductive contact member 19 attached to the frame 2 so as to be in contact with the shaft 10.

Therefore, even when the carrier frequency of the inverter is high and the shaft voltage is high, the current flowing through the frame 2 can be made to flow through the contact member 19 to the shaft 10 without passing through the bearings 11 and 12. Thus, the occurrence of electric corrosion of the first bearing 11 and the second bearing 12 can be suppressed, and the reliability of the motor 1 and the electric blower 100 can be improved.

The above-described effects can be obtained by fixing the contact member 19, which is in contact with the shaft 10, to the frame 2. Thus, the motor 1 has a simple configuration, and assembling thereof is easy.

The insulating member 16 described in the first embodiment may be further provided between the preload member 15 and the second bearing 12, or between the preload member 15 and the spacer 14. Further, the insulating preload member 15A described in the second embodiment may be used in place of the preload member 15.

In the example illustrated in FIG. 11, the contact member 19 is attached to the hole 21b of the frame 2. However, the contact member 19 may be provided in any other portion of the frame 2 as long as the frame 2 and the shaft 10 can be made electrically connected to each other.

### First Modification

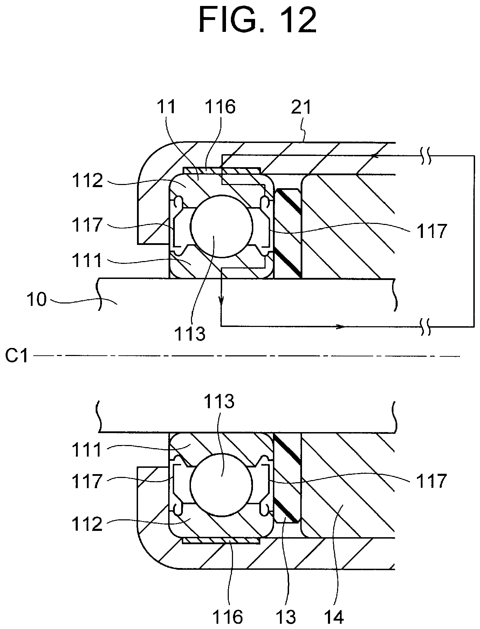

Next, a first modification to which each of the first to sixth embodiments described above is applicable will be described. FIG. 12 is a schematic diagram illustrating the first bearing 11 of the first modification and its surroundings. The first bearing 11 includes the inner ring 111, the outer ring 112, and the rolling elements 113 as described in the first embodiment. In addition, the first bearing 11 of the first modification includes shields 117 between the inner ring 111 and the outer ring 112 for reducing an electrical gap between the rings 111 and 112.

The shield 117 is a ring-shaped member provided on each of both sides with respect to the rolling elements 113. The shield 117 is provided on each of both sides with respect to the rolling elements 113 in the axial direction in this example, but may be provided on at least one side with respect to the rolling elements 113.

The shield 117 is formed of a member having conductivity. For example, the shield 117 is formed of a metal member such as an electrogalvanized steel sheet. The first bearing 11 is fixed to the bearing housing portion 21 of the frame 2 by a conductive adhesive agent 116.

With this configuration, the frame 2 and the shaft 10 are electrically connected to each other by the adhesive agent 116, the outer ring 112, the shields 117, and the inner ring 111, all of which have conductivity.

When the current from the frame 2 flows through the first bearing 11, the current flows from the outer ring 112 to the inner ring 111 through the shields 117. Thus, the current flowing to the rolling elements 113 can be suppressed. Thus, the occurrence of electric corrosion on the raceways of the inner ring 111 and outer ring 112 of the first bearing 11 and on the rolling surfaces of the rolling elements 113 can be suppressed.

FIG. 12 illustrates only the first bearing 11, but the second bearing 12 (FIG. 3) also has the shields 117 and is fixed to the frame 2 by the conductive adhesive agent 116. Thus, the occurrence of electric corrosion of the second bearing 12 can also be suppressed.

### Second Modification

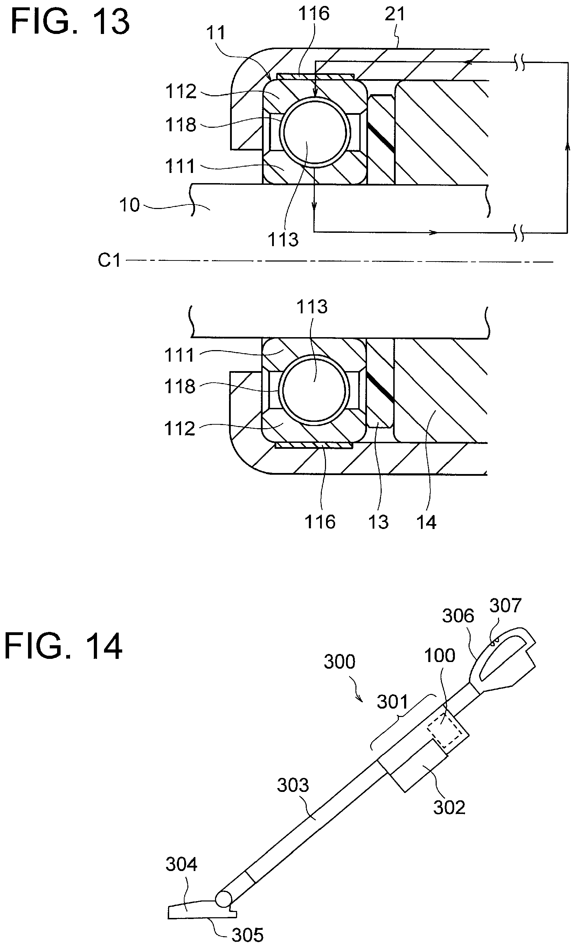

Next, a second modification to which each of the first to sixth embodiments described above is applicable will be described. FIG. 13 is a schematic diagram illustrating a first bearing 11 of the second modification and its surroundings. The first bearing 11 includes the inner ring 111, the outer ring 112, and the rolling elements 113 as described in the first embodiment, and also includes a conductive lubricant 118 disposed around each of the rolling elements 113. The first bearing 11 is fixed to the bearing housing portion 21 of the frame 2 by the conductive adhesive agent 116, as in the first modification.

With this configuration, the frame 2 and the shaft 10 are electrically connected to each other by the adhesive agent 116, the outer ring 112, the lubricant 118, and the inner ring 111, all of which have conductivity.

When the current from the frame 2 flows through the first bearing 11, the current flows from the outer ring 112 to the inner ring 111 through the lubricant 118. Thus, the current flowing to the rolling elements 113 can be suppressed. Thus, the occurrence of electric corrosion on the raceways of the inner ring 111 and outer ring 112 of the first bearing 11 and on the rolling surfaces of the rolling elements 113 can be suppressed.

FIG. 13 illustrates only the first bearing 11, but the second bearing 12 (FIG. 3) also has the conductive lubricant 118 and is fixed to the frame 2 by the conductive adhesive agent 116. Thus, the occurrence of electric corrosion of the second bearing 12 can be suppressed.

The shield 117 (FIG. 12) described in the first modification may be added to the bearings 11 and 12 of the second modification.

### (Vacuum Cleaner)

Next, a vacuum cleaner to which the electric blower of each embodiment or modification is applicable will be described. FIG. 14 is a schematic diagram illustrating a vacuum cleaner 300 in which the electric blower 100 (FIG. 1) of the first embodiment is used.

The vacuum cleaner 300 includes a vacuum cleaner main body 301, a pipe 303 connected to the vacuum cleaner main body 301, and a suction portion 304 connected to a tip of the pipe 303. The suction portion 304 is provided with a suction opening 305 for sucking air containing dust. A dust collection container 302 is disposed inside the vacuum cleaner main body 301.

The electric blower 100 is disposed inside the vacuum cleaner main body 301. The electric blower 100 sucks the air containing dust through the suction opening 305 into the dust collection container 302. The electric blower 100 has a configuration, for example, illustrated in FIG. 1. The vacuum cleaner main body 301 is also provided with a grip portion 306 to be gripped by a user, and the grip portion 306 is provided with an operation unit 307 such as an on/off switch.

When the user grips the grip portion 306 and operates the operation unit 307, the electric blower 100 is activated. When the electric blower 100 is activated, the suction air is generated, and dust is sucked together with the air through the suction opening 305 and the pipe 303. The sucked dust is stored in the dust collection container 302.

The vacuum cleaner 300 can achieve a high operation efficiency since the electric blower 100 having high reliability is used therein. Instead of the electric blower 100 (FIG. 1) of the first embodiment, the electric blower of any other embodiment or modification may be used.

### (Hand Dryer)

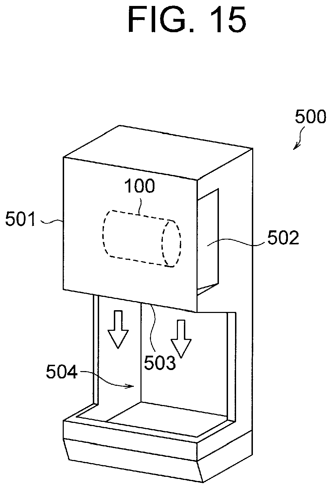

Next, a hand dryer to which the electric blower of each embodiment or modification is applied will be described. FIG. 15 is a schematic diagram illustrating a hand dryer 500 in which the electric blower 100 (FIG. 1) of the first embodiment is used.

The hand dryer 500 includes a housing 501 and the electric blower 100 fixed inside the housing 501. The electric blower 100 has a configuration, for example, illustrated in FIG. 1. The housing 501 has an intake opening 502 and an outlet opening 503. The housing 501 also has a hand insertion portion 504 located below the outlet opening 503 and into which the user's hand is inserted. The electric blower 100 generates an air flow to suck air from outside the housing 501 via the intake opening 502 and then blow the air to the hand insertion portion 504 via the outlet opening 503.

When the power supply of the hand dryer 500 is turned on, the electric power is supplied to the electric blower 100, and the motor 1 is driven. While the electric blower 100 is driven, the air outside the hand dryer 500 is sucked through the intake opening 502 and blown out from the outlet opening 503. When the user inserts its hands into the hand insertion portion 504, water droplets attached to the hands can be blown off or evaporated by the air blown from the outlet opening 503.

The hand dryer 500 can achieve a high operation efficiency, since the electric blower 100 having high reliability is used therein. Instead of the electric blower 100 of the first embodiment, the electric blower of any other embodiment or modification may be used.

Although the desirable embodiments of the present invention have been specifically described above, the present invention is not limited to the above-described embodiments, and various modifications and changes can be made to those embodiments without departing from the scope of the present invention.

### DESCRIPTION OF REFERENCE CHARACTERS

1, 1A, 1B, 1C, 1D, 1E motor; 2 frame; 4 fan cover; 5 moving blade portion; 6 stationary blade portion; 7 housing; 8 circuit board; 10 shaft; 11 first bearing; 12 second bearing; 13 washer; 14, 14A spacer; 15, 15A preload member; 16 insulating member; 17 insulating member; 18, 19 contact member; 21 bearing housing portion; 21a wall; 21b hole; 22 stator housing portion; 31 rotor; 32 stator; 33 stator core; 34 insulating portion; 35 coil; 36 board support portion; 41 intake port; 42 outer peripheral wall ; 81 electronic component; 100 motor; 111, 121 inner ring; 112, 122 outer ring; 113, 123 rolling element; 115, 125 adhesive agent (insulating portion); 116 adhesive agent; 117 shield; 118 lubricant; 300 vacuum cleaner; 301 vacuum cleaner main body; 302 dust collection container; 303 pipe; 304 suction portion; 305 suction opening; 306 grip portion; 500 hand dryer; 501 housing; 502 intake opening; 503 outlet opening; 504 hand insertion portion.

## Claims

1. A motor comprising:
a shaft;
a rotor attached to the shaft;
a stator surrounding the rotor;
a frame housing the stator;
a first bearing and a second bearing attached to the frame and located on one side of the rotor in an axial direction of the shaft, the first bearing and the second bearing rotatably supporting the shaft;
a spacer attached to the frame and located between the first bearing and the second bearing in the axial direction;
a washer disposed between the first bearing and the spacer in the axial direction and having insulating property;
a preload member disposed between the spacer and the second bearing in the axial direction; and
an insulating member disposed between the preload member and the second bearing in the axial direction or between the preload member and the spacer in the axial direction.

2. The motor according to claim 1, wherein the insulating member is formed of polycarbonate, polyacetal, polyetheretherketone, or a rubber.

3. A motor comprising:
a shaft;
a rotor attached to the shaft;
a stator surrounding the rotor;
a frame housing the stator;
a first bearing and a second bearing attached to the frame and located on one side of the rotor in an axial direction of the shaft, the first bearing and the second bearing rotatably supporting the shaft;
a spacer attached to the frame and located between the first bearing and the second bearing in the axial direction;
a washer disposed between the first bearing and the spacer in the axial direction and having insulating property; and
a preload member disposed between the spacer and the second bearing in the axial direction and having insulating property.

4. The motor according to claim 3, wherein the preload member is formed of polycarbonate, polyacetal, or polyetheretherketone.

5. A motor comprising:
a shaft;
a rotor attached to the shaft;
a stator surrounding the rotor;
a frame housing the stator;
a first bearing and a second bearing attached to the frame and located on one side of the rotor in an axial direction of the shaft, the first bearing and the second bearing rotatably supporting the shaft;
a spacer attached to the frame and disposed between the first bearing and the second bearing in the axial direction, the spacer having insulating property;
a washer disposed between the first bearing and the spacer in the axial direction; and
a preload member disposed between the spacer and the second bearing in the axial direction.

6. The motor according to claim 5, wherein the spacer is formed of polycarbonate, polyacetal, or polyetheretherketone.

7. A motor comprising:
a shaft;
a rotor attached to the shaft;
a stator surrounding the rotor;
a frame housing the stator;
a first bearing and a second bearing attached to the frame and located on one side of the rotor in an axial direction of the shaft, the first bearing and the second bearing rotatably supporting the shaft;
a spacer attached to the frame and located between the first bearing and the second bearing in the axial direction;
an insulating member provided between the spacer and the frame in a radial direction about the shaft;
a washer disposed between the first bearing and the spacer in the axial direction; and
a preload member disposed between the spacer and the second bearing in the axial direction.

8. The motor according to claim 7, wherein the insulating member is formed of polycarbonate, polyacetal, or polyetheretherketone.

9. A motor comprising:
a shaft;
a rotor attached to the shaft;
a stator surrounding the rotor;
a frame housing the stator;
a first bearing and a second bearing attached to the frame and located on one side of the rotor in an axial direction of the shaft, the first bearing and the second bearing rotatably supporting the shaft;
a spacer attached to the frame and disposed between the first bearing and the second bearing in the axial direction, the spacer having conductivity;
a contact member attached to the spacer so as to be in contact with the shaft and having conductivity;
a washer disposed between the first bearing and the spacer in the axial direction and having insulating property; and
a preload member disposed between the spacer and the second bearing in the axial direction.

10. The motor according to claim 9, wherein the contact member is a brush.

11. A motor comprising:
a shaft;
a rotor attached to the shaft;
a stator surrounding the rotor;
a frame housing the stator;
a first bearing and a second bearing attached to the frame and located on one side of the rotor in an axial direction of the shaft, the first bearing and the second bearing rotatably supporting the shaft;
a spacer attached to the frame and located between the first bearing and the second bearing in the axial direction;
a washer disposed between the first bearing and the spacer in the axial direction and having insulating property;
a preload member disposed between the spacer and the second bearing in the axial direction; and
a contact member attached to the frame so as to be in contact with the shaft and having conductivity.

12. The motor according to claim 11, wherein the contact member is a brush.

13. The motor according to any one of claims 1 to 12, wherein each of the first bearing and the second bearing is attached to the frame via an insulating portion.

14. The motor according to any one of claims 1 to 13, wherein each of the first bearing and the second bearing has an inner ring fixed to the shaft, an outer ring surrounding the inner ring, and a rolling element held between the inner ring and the outer ring.

15. The motor according to claim 14, wherein each of the first bearing and the second bearing has a shield between the inner ring and the outer ring, the shield having conductivity.

16. The motor according to claim 14 or 15, wherein each of the first bearing and the second bearing has a lubricant around the rolling element, the lubricant having conductivity.

17. The motor according to any one of claims 1 to 16, wherein the washer is formed of a rubber.

18. The motor according to any one of claims 1 to 17, wherein the spacer is formed of a metal.

19. An electric blower comprising:
the motor according to any one of claims 1 to 18; and
a blade attached to the shaft of the motor.

20. A vacuum cleaner comprising:
a suction portion having a suction opening;
a dust collection container to collect dust;
the electric blower according to claim 19, the electric blower sucking air containing dust through the suction opening into the dust collection container; and
a grip portion to be gripped by a user.

21. A hand dryer comprising:
a housing having an intake opening and an outlet opening; and
the electric blower according to claim 19, the electric blower being disposed inside the housing, the electric blower sucking air through the intake opening and blowing air through the outlet opening.
